# EUROPEAN PATENT SPECIFICATION

(11) **EP 1 440 038 B1**
(45) Date of publication and mention of the grant of the patent: **09.02.2005**
(21) Application number: 01982709.6
(22) Date of filing: 31.10.2001
(51) Int. Cl.: C01F 11/18, C09C 1/02, C05D 3/02

(54) **PROCESS FOR GENERATION OF FINELY DIVIDED CALCIUM CARBONATE FROM CALCIUM CARBONATE RICH INDUSTRIAL BY-PRODUCT**
VERFAHREN ZUR ERZEUGUNG VON FEINTEILIGEM CALCIUMKARBONAT AUS CALCIUMKARBONATREICHEN INDUSTRIELLEN NEBENPRODUKTEN
PROCEDE DE PRODUCTION DE CARBONATE DE CALCIUM FINEMENT SEPARE A PARTIR D'UN SOUS-PRODUIT INDUSTRIEL RICHE EN CARBONATE DE CALCIUM

(43) Date of publication of application: 28.07.2004
(73) Proprietor: Council of Scientific and Industrial Research, New Delhi 110 001 (IN); Gujarat Narmada Valley Fertilizer Company Limited, 392 015 Gujarat (IN)
(72) Inventor: JASRA, Rakesh, Vir, Bhavnagar, 364 002 Gujarat (IN); OZA, Pravinchandra Mahasukhray, Bhavnagar, 364 002 Gujarat (IN); SOMANI, Rajesh Shantilal, Bhavnagar, 364 002 Gujarat (IN); CHUNNAWALA, Jatin Rameshchandra, Bhavnagar, 364 002 Gujarat (IN); SHETH, Mrinal Vinodbhai, Ghavnagar, 364 002 Gujarat (IN); THAKKAR, Vikram Vinodrai, Bhavnagar, 364 002 Gujarat (IN); BADHEKA, Yogi Mansukhlal, Bhavnagar, 364 002 Gujarat (IN); AYYER, J. Gujarat Narmada Valley Fertilizer Co Ltd, District: Baruch, 392 015 Gujarat (IN); PATEL, Virendra Bhikhabhai, District: Baruch, 392 015 Gujarat (IN)
(74) Representative: Evans, Claire
(86) International application number: PCT/IN2001/000197
(87) International publication number: WO 2003/037796

## Description

### Technical Field

The present invention relates to a process for purification of Calcium carbonate rich by-product generated in industrial processes, particularly in nitrophosphate plants of fertilizer industry, and converting the same to finely divided calcium carbonate.

The purification is carried out by thermal treatment of wet calcium carbonate rich Byproduct, as it is available from nitrophosphate plant, at a specific temperature, so as to remove moisture, volatile matter and to decompose or sublime the impurities present in the form of ammonium and nitrate salts taking special care not to decompose the calcium carbonate and coating the finely divided calcium carbonate obtained by using emulsion or solution of fatty acid or its salt.

Calcium carbonate finds use in the manufacture of paper, rubber, plastics, glass, textiles, putties, chalks, sealant, adhesives, paints, inks, varnishes, food, cosmetics, dentifrice, chemicals and pharmaceuticals. Calcium carbonate produced according to the process of this invention is particularly suitable for use as filler in rubber, paint, plastics and PVC.

### Background Art

Several physical and chemical processes have been suggested to remove impurities from waste calcium carbonate. Physical processes requires drying and grinding to such a fineness that impurities can be removed by screening, classification, magnetic separation, hydrocyclone separation or floatation. The disadvantages associated with these physical methods of removing impurities are requirement of special machines / devices and their maintenance. Moreover, these processes are complex and difficult to administer. The unpredictable process efficiencies, variation in results of quantities of impurities removed and the expenses associated with employing such physical techniques for removing impurities are other disadvantages.

Leaching or bleaching the dried and ground calcium carbonate with chemicals such as halogen, oxygen containing acids of a halogen or its salt, ozone, hydrogen peroxide etc. as described in British patent No. 1285891 (1972 ) is chemical process for purification. Disadvantages of chemical processes are that it require special chemicals, number of unit operations to perform the treatment and use of single chemical may not be suitable to remove all the impurities. Removal and separation of excess chemical remained after its use is another disadvantage.

Another previously known and widely used method for the treatment of waste containing calcium carbonate, generally known as lime sludge, is re-burning which consists promoting drying, giving enough time for burning within the kiln and removing burned lime after undergoing cooling in the material cooler fitted immediately after the kiln. The burned lime reaches temperature of 1000-1200°C during the treatment in the kiln. Many technological improvements have been made in kiln design, incorporating drier crusher, e.g., hammer mill type, which is mounted before the kiln and cyclone separators. Such a plant which is also known in other contexts, as described in EP patent No. 0041113 (1982) to L.Lenado and Ramon Aguillon, is associated with many disadvantages, such as incorporation of new machine, its maintenance, necessity to use special steel which can withstand high temperature, high dust loss, requirement of cyclone separators and caking in ducts due to the dust from the kiln being sticky within 600-700°C. The product obtained is calcium oxide which required to be further subjected to hydration and carbonation, to produce industrially useful calcium carbonate, otherwise, as practised, it is recycled in causticizing process in producing paper pulp.

Reference may be made to US patent No. 5110567 (1992) to Mattelmaki, Eskoi wherein dryer crusher has been replaced with a pneumatic drying device, which brings down the final temperature of the exhaust gas. However, this process has the main disadvantage in the sense that the material processed is not free flowing and due to its dry sticking tendency often cause ring formation in the preheating zone of the rotary kiln. Furthermore, the limitation of this process is that it produces calcium oxide and not calcium carbonate.

US patent No.4892649 (1990) to Mehaffey Joseph L. and Newman Thomas C., wherein a process for purifying calcium carbonate ore by the removal of silicate impurities from the ore using reverse floatation is disclosed. The process achieves high yields and low acid insoluble content of the calcium carbonate product by employing novel collectors which comprise organo-nitrogen compounds such as quaternary ammonium compounds. The disadvantages are that floatation unit is required which is to be operated continuously. Disposal of separated impurities and removal of unused quaternary compounds concerns about pollution.

US patent.No.5711802 (1998) to Theil Jorgen, discloses a method and plant for treatment of lime sludge formed by the caustizing process during the manufacture of paper pulp. The lime sludge is dried, pulverised and then preheated in a Kiln at a predetermined temperature in the range 400 - 600°C to get dry and pulvurent calcium carbonate. The dried material thus obtained is further calcined / burned in any type of suitable kiln to produce quick lime which in turn can be reused in causticizing process. The drawbacks associated with this invention are that the lime sludge is to be dried and pulverized and preheated prior to calcination. The product obtained is calcium oxide and therefore can not be used in rubber, paint, plastics and PVC.

US patent No.5690897 (1997) to Drummand Donald K., describes a method for purification of calcium carbonate by lowering the iron content. The method involves addition of an iron-chelating agent to an aqueous calcium carbonate slurry, reducing pH by employing CO₂ containing gas, while maintaining the slurry at temperature range of 20 to 100°C. The slurry is stirred, filtered, washed and dried. The disadvantage of this invention is that it is limited to the removal of iron impurities. Moreover, continuously passing CO₂ gas and maintaining pH at constant value, simultaneously with maintaining the temperature is difficult to administer and also uneconomical. In US patent No. 4793985 (1998) to Price Charles R. et. al. has disclosed a process for producing ultra fine ground calcium carbonate in which a dry feed limestone is slurried to 15 to 60 % by weight. solids slurry and dispersed with an organic polyacrylate (DISPEX N40) and other macromolecular dispersing agents. The dispersed slurry is fed to an attrition mill where it is bead ground to 50 - 70 % less than 2 micron. The ground calcium carbonate is classified in a centrifuge into a product stream having from 70-99 % of its particles less than 2 microns and an underflow stream of larger particles. The product is treated with ozone which serves not only to increase the brightness of the product but return the slurry to a non-dispersed state. The calcium carbonate slurry is then dewatered to produce a 58- 69 % solids product suitable for preparing a higher solid slurry or for spray drying. The drawbacks associated is that, ozone being rare gas, it is utilised for merely improving brightness. Use of ozone also adds to the production cost.

Bunger James W. et al. in US patent No 5846500 (1998) disclosed a process for the purification of calcium hydroxide using a highly dilute aqueous solution for dissolution of calcium hydroxide followed by settling and filtration for the removal of impurities, particularly from hydrated carbide lime, which is used subsequently as a feed stock for a high value calcium carbonate. Precipitated calcium carbonate is formed by reaction of the purified calcium hydroxide solution with CO₂ in a plug-flow reactor system. The drawbacks of this invention is that due to the very low solubility of calcium hydroxide in water much dilution is required to dissolve all calcium hydroxide. Moreover, settling and filtration steps of large volume of hydroxide solution becomes difficult and requires settling tank & filtration unit which make the process economically unattractive.

It is evident from the above facts that need exists for development of a new process for the generation of calcium carbonate from industrial by-productrich in calcium carbonate.

### Object of the Invention

The work described in the present invention has been carried out with a view to purify the calcium carbonate rich by-product generated in nitrophosphate plant of fertiliser or other industry so as to convert the same to industrially useful value added product.

The main object of the present invention is to provide a process for purification of calcium carbonate rich by-product generated in industrial processses , which obviates the drawbacks as detailed above.

Another object of the present invention is to develop an alternative source to limestone for producing finely divided calcium carbonate useful for commercial applications.

Still another object of the present invention is to provide a continuous process for the purification of calcium carbonate rich by-product having fine particle size from 20 to 150 microns as generated in nitrophosphate fertiliser plant, in order to minimise the pollution caused by such solid waste and improve the environment quality.

Yet another object of the present invention is to provide a thermal treatment method for purification of calcium carbonate rich by-product generated in a nitrophosphate fertiliser plant.

Yet another object of the present invention is to produce purified and coated finely divided calcium carbonate useful as filler in paints, plastics, rubber and PVC by profitably utilising the calcium carbonate rich by-product generated in nitrophosphate fertiliser plant.

Yet another object of the present invention is to provide pollution abatement measures in nitrophosphate fertiliser plant and calcium carbonate rich by-product treatment unit.

These objects of the present invention will become apparent as further provided in the detailed description which follows.

### Summary of the Invention

Heat treatment described in the present invention significantly purifies the calcium carbonate rich by-product generated in nitrophosphate fertiliser plant to get purified calcium carbonate. It is further to be noted that the calcium carbonate rich by-product having moisture content up to 25% can be fed at suitable rates through the system without adversely affecting the end product quality. It is to be further noted that the cooler outlet material can be ground to get the fineness as required for end applications. The process of coating the pulverised/ finely ground material as applied herein provides a means of making the material suitable for rubber, paint, plastics and PVC.

In addition, the process of the present invention prevents air pollution by avoiding dusting with the use of indirect heating and by scrubbing the liberated ammonium and nitrogen compounds in water. More over, the process remarkably increases whiteness/ brightness of the product.

### Brief description of the accompanying drawings

In the drawing accompanying this specification, figure-1, represents the machines / equipments of the unit used for the heat treatment of calcium carbonate rich by-product generated in nitrophosphate fertiliser plant. The unit embodies the following equipments: M-paddle mixer cum screw feeder; S₁-Indirect rotary dryer; S₂-Indirect rotary drum heater; S₃- Jacketed Cooler; P-Ultrafine pulverizer; T-Slurry tank; F-Pressure filter; D-Flash dryer and C- Cyclone / dust collector. The numbers 1 to 8 indicate the following:
1. Calcium carbonate rich by-product i.e. Feed material.
2. Water
3. Coating agent solution
4. Steam
5. Filtrate
6. Product
7. Flue gases
8. Exhaust gases

### Detailed Description of the invention

Accordingly, the present invention provides a process for purification of by-product calcium carbonate generated in industrial processes, specifically in nitrophosphate fertiliser plant for producing high value finely divided calcium carbonate which comprises feeding continuously wet calcium carbonate rich by-product containing maximum up to 25% moisture and having particle size in the range 20 to 150 microns, at a feed rate of 5 to 20 kg / h, with the help of screw feeder which is rotated at the speed of 10 to 40 RPM, into a Rotary Dryer, preheated and maintained at a desired temperature by indirect heating, in the range of 250 to 400°C to remove moisture up to 25%, volatile matter 7 to 8 % and to decompose or sublime the ammonium compounds present as impurities 0.1 to 0.3 % (as ammoniacal Nitrogen), varying the residence time from 20 to 30 by changing the angle of inclination from 1.0 to 1.4 degree and varying rotation speed of dryer from 1 to 4 RPM, thereby varying material outlet rate from 2.5 to 20 kg / h, blowing away the liberated water vapours, volatile matters and ammonia gas from dryer, scrubbing the exhaust gases into a water tank so as to avoid dusting and liberation of ammonia in the surroundings of the plant, charging the outcoming material from dryer into Rotary Drum Heater, through connectors / breachers equipped with bellow and feed hopper, preheated and maintained at a desired temperature by indirect heating above about 550°C and below about 650°C to decompose or sublime the nitrate impurities in the range of 0.05 to 0.1 % (as Nitrate Nitrogen), allowing the material to remain in rotary drum heater for a residence time from 30 to 90 minutes by changing angle of inclination from 1.0 to 1.4 degrees and varying rotation speed from 1 to 4 RPM, removing liberated gases from the drum heater and scrubbing it in water tank to prevent the surroundings from dusting and NOx pollution, allowing the drum heater outlet material to pass through water-circulated jacketed screw conveyer type material cooler, so as to get the purified material at ambient temperature at a outlet rate synchronised with the outlet rate of rotary drum heater i.e. from 2 to 15 kg / h, subsequently, it is subjected to grinding in a pin / attrition mill to a microparticulate size in the range 1 to 20 microns, dispersing the finely divided calcium carbonate in a slurry tank so as to obtain 40 to 50 % by weight. solid slurry, heating the slurry to 85 to 95°C while agitating, followed by addition of hot (70 to 90° C) emulsion or solution of fatty acid derivatives or its salts, having carbon chain length of from 16 to 20 carbon atoms, in sufficient amount to get 3 to 4 % total fatty matter in final product, allowing the mixture to cool to less than 50°C where after water soluble components are removed from the mixture in known manner and the product is isolated, dried and pulverised to obtain finely divided coated calcium carbonate.

In an embodiment of the present invention, calcium carbonate rich by-product having moisture content maximum up to 25% by weight can be used as starting/feed material. This provides special advantage of using wet calcium carbonate rich by-product directly coming out of the nitrophosphate fertilizer plant or stored for a longer period in silos. Therefore, the process provided by the present invention can be linked to nitrophosphate fertilizer plant and made continuous.

In another embodiment of the present invention, calcium carbonate rich by-product of nitrophosphate fertilizer plant can be continuously fed in the range of 5 to 20 kg /h purified by heat treatment to a level where it can be used as filler in rubber, plastics, paints and PVC.

In yet another embodiment of the present invention, the whiteness / brightness of the product is improved remarkably, from about 85 % in calcium carbonate rich by-product to greater than 96 %, by the heat treatment and micropulverisation of calcium carbonate rich by-product.

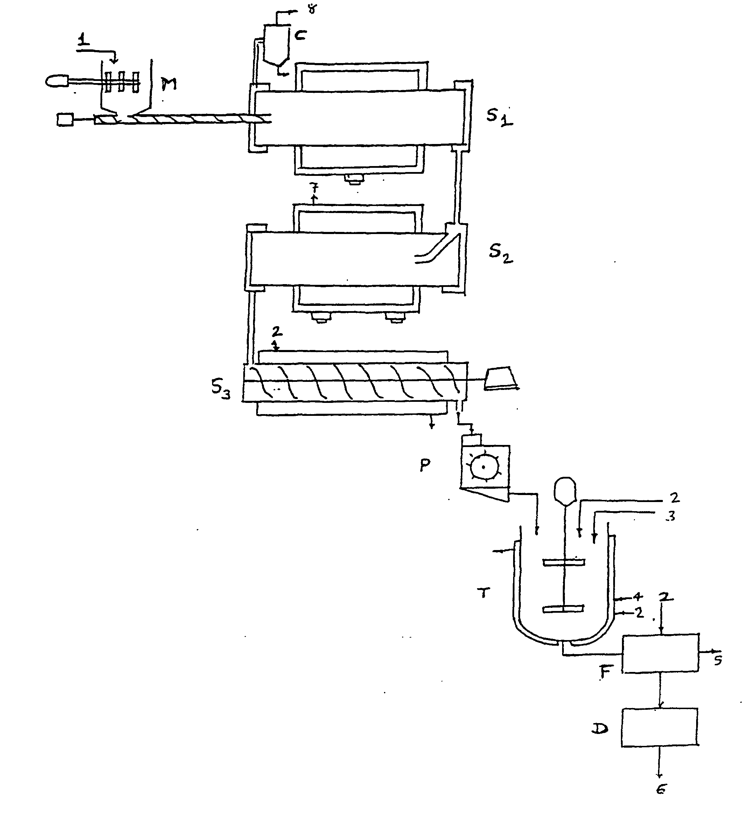

In still another embodiment of the present invention, an eco-friendly and continuous process for purifying calcium carbonate rich by-product generated in industrial processes, specifically in nitrophosphate fertiliser plant is provided by using a specially designed unit in which instead of using Rotary Kiln having drying, calcining and cooling zones in a single shell with direct heating, which leads to extensive dust generation when finely powdered material is passed through it, a Dryer-Heater -Cooler arranged in a stack (see Fig.1) and heated indirectly to avoid dusting and with provision for removing the liberated gases and scrubbing the same in water for pollution abatement is used.

In yet another embodiment of the present invention, moisture up to 25%, volatile matters in the range of 7 to 8 % and ammonium compounds varying from 0.1 to 0.3 % (as ammonical Nitrogen) present in calcium carbonate rich by-product is removed in rotary dryer at a temperature in the range 250 to 400° C.

In yet another embodiment of the present invention, Nitrate impurities ranging from 0.05 to 0.1 % (as Nitrate Nitrogen) present in calcium carbonate rich by-product is removed in rotary drum heater at a temperature above 550 and below 650°C .

In yet another embodiment of the present invention , the material outlet rate from rotary dryer and rotary drum heater could be adjusted to 2.5 to 20 kg / h and 2 to 15 kg / h respectively by changing the angle of inclination from 1.0 to 1.4 degrees and varying the rotation speed from 1 to 4 RPM.

In yet another embodiment of the present invention, coating of the purified and finely divided calcium carbonate using hot emulsion or solution of fatty acid derivatives or its salts was done to obtain a product with 3 to 4 % total fatty matter which makes it suitable for rubber, paints, plastics and PVC.

In yet another embodiment of the present invention, purity of the calcium carbonate rich by-product was improved from 88 - 90 % to 97 - 98 % by removing the impurities through heat treatment.

Calcium carbonate rich by-product generated in industrial processes, specifically in nitro phosphate fertiliser plant, is containing 88 - 90 % calcium carbonate, Total Nitrogen 0.2 - 0.4 %, Ammonical Nitrogen 0.1 - 0.3 % , Nitrate Nitrogen 0.05 - 0.1 %, Phosphate as P₂O₅ 1.0 - 1.5 %, Fluoride as F- 0.20 - 0.25 %, Mixed oxides (aluminium, iron, phosphates and Matter insoluble in HCl) 3.50- 4.00 %, Volatile matter 7 - 8 %, Loss on ignition 43 - 45 %, Soluble alkali as Na₂O 0.10 - 0.15 and Acid insoluble matter 1.0 - 1.2 %. Moreover, the pH of 5% aqueous suspension is 9 - 9.3, tapped bulk density 1.30- 1.35 g / ml, brightness / whiteness 85% and particle size in the range 20 to 150 microns.

Attempts were made to purify the calcium carbonate rich by-product by the methods known in the prior art. Physical methods of separation such as sieving, floatation, sedimentation and hydrocyclone were performed using conventional techniques. Sieve analysis of the dried calcium carbonate rich by-product was carried out and analyzed for impurities. -350 mesh fraction was containing minimum impurities but the rejection was 50 % of the starting calcium carbonate. Sedimentation and hydrocyclone techniques could not be gainfully employed due to coarse particle size ( 20 to 150 microns) and high density ( 2..3 to 2.7 g/ml). Froth floatation method using 10% weight/weight slurry of calcium carbonate rich by-product with pine oil as a frother and cationic, anionic and non ionic surface active reagents was also attempted without significant removal of impurities. Washing of the by-product with hot or cold water was also not found useful for the removal of ammonium and nitrate impurities to desired level. Results obtained in each of these methods showed that the impurities present in calcium carbonate rich by-product are integral part of the calcium carbonate crystals and not physically mixed as is normal in case of conventional raw material - limestone.

Conventional chemical treatment methods for leaching the impurities using chemicals as mentioned in prior art was not fruitful as the chemicals were unable to leach the entrapped impurities, on the contrary, calcium carbonate was getting dissolved.

Therefore, it was decided to study the effect of heat treatment on calcium carbonate rich by-product. The material was heated from ambient to 900°C stepwise, in each step temperature was increased by 100°C and maintained at that temperature for one hour. The percentage weight loss was noted in each case. All the samples were examined by XRD analysis for percentage crystallinity and to identify the phase present in heat treated by-product calcium carbonate. The results given in Table 1 show that impurities from calcium carbonate rich by-product are removed by heat treatment up to 600°C without decomposing the calcium carbonate.

**Table 1:**

| **Effect of heat treatment on by-product calcium carbonate.** | | | | |
|---|---|---|---|---|
| **Sr.No** | **Sample** | **% Weight loss %** | **Crystalinity** | **Phase Identified** |
| 1. | As such | - | 81 | Calcite |
| 2. | Heated at 100°C,1 h | 3.60 | 83 | Calcite |
| 3. | Heated at 200°C,1 h | 5.00 | - | Calcite |
| 4. | Heated at 300°C,1 h | 5.70 | - | Calcite |
| 5. | Heated at 400°C,1h | 6.80 | - | Calcite |
| 6. | Heated at 500°C,1h | 9.40 | 67 | Calcite |
| 7. | Heated at 600°C,1h | 9.90 | 62 | Calcite |
| 8. | Heated at 700°C,1h | 14.50 | 56 | Calcite |
| 9. | Heated at 800°C,1h | 47.10 | 0.0 | CaO |
| 10. | Heated at 900 °C,1h | 47.10 | 0.0 | CaO |

Therefore, in the present invention purification of calcium carbonate rich by-product generated in industrial processes, specifically in nitrophosphate fertiliser plant, is carried out by a heat treatment.

Wet by-product calcium carbonate containing maximum up to 25% moisture and having particle size in the range 20 to 150 microns is fed continuously into a Rotary Dryer, preheated and maintained at a desired temperature in the range of 250 to 400°C by indirect heating at a feed rate of 5 to 20 kg / h, with the help of a screw feeder which is rotated at the speed of 10 to 40 RPM. During this, moisture up to 25% and volatile matter 7 to 8 % are removed. Ammonium compounds present as impurities in the range 0.1 to 0.3 % (as ammonical Nitrogen) are decomposed or sublimed.

The residence time in rotary dryer is varied from 20 to 30 minutes by changing the angle of inclination from 1.0 to 1.4 degrees and varying rotation speed of dryer from 1 to 4 RPM. As a result, material outlet rate varied from 2 to 20 kg / h.

The liberated water vapour, volatile matters and ammonia gas in dryer were blown away from dryer shell with the help of a blower. The exhaust gases were scrubbed into a water tank so as to avoid dusting and liberation of ammonia in the surroundings of the plant.

The outcoming material from dryer is charged into rotary drum heater, through connectors / breachers equipped with bellow and feed hopper, preheated and maintained at a desired temperature of 550°C to 650°C by indirect heating. During this, the nitrate impurities present in the range 0.05 to 0.1 % (as Nitrate Nitrogen), is either decomposed or sublimed. The material was allowed to remain in rotary drum heater for a residence time from 30 to 90 minutes by changing angle of inclination from 1.0 to 1.4 degrees and varying rotation speed from 1 to 4 RPM. Liberated gases from the drum heater are scrubbed in water tank to prevent the surroundings from dusting and NOx pollution.

The drum heater outlet material is passed through water-circulated jacketed screw conveyer type material cooler, so as to get the purified material at ambient temperature at a outlet rate synchronised with the outlet rate of rotary drum heater i.e. from 2 to 15 kg/h.

Subsequently, it is subjected to grinding in a pin / attrition mill to a microparticulate size in the range 1 to 20 microns. The finely divided calcium carbonate is dispersed in a slurry tank so as to obtain 40 to 50 % by weight. solid slurry.

The slurry is heated to 85 to 95°C while agitating, followed by addition of hot (70 to 90°C ) emulsion or solution of fatty acid derivatives or its salts, having carbon chain length of from 16 to 20 carbon atoms, in sufficient amount to get 3 to 4 % total fatty matter in final product. The mixture is allowed to cool to less than 50°C, whereafter water soluble components are removed from the mixture in known manner and the product is isolated, dried and pulverised to obtain finely divided coated calcium carbonate having properties as shown in Table 2. which indicated that it is useful as filler in paints, plastics, rubber and PVC.

**Table 2.**

| **Properties of purified, finely divided and coated calcium carbonate.** | | | | |
|---|---|---|---|---|
| **Sr.No.** | **Property** | | **Results** | |
| | | **Uncoated** | | **Coated** |
| 1. | Sieve Residue on 150 mesh BSS | NIL | | NIL |
| 2. | pH of 5% aqueous suspension | 9.5-10.5 | | 9.0 - 10.0 |
| 3. | Acid insoluble, % | 0.20 - 0.25 | | 0.10 - 0.15 |
| 4. | Loss on ignition, %. | 42 - 44 | | 43 - 45 |
| 5. | Mixed Oxide, (Fe, Al, Phosphates, silica ) , % | 3.0 - 4.0 | | 3.0 - 3.5 |
| 6. | Purity as CaCO3, by Acidimetry, % | 97 - 98 | | 95 - 97 |
| 7. | Total fatty matter, % | NIL | | 2.5 - 3.5 |
| 8. | Particle size, microns | Less than 20 | | Less than 20 |

Table 3 represents particle size distribution curves for dried calcium carbonate rich by-product, dryer outlet material, calciner / cooler outlet material, finely divided calcium carbonate and coated calcium carbonate, measured by Mastersizer-2000 (Malvern, UK), particle size analyser as dry powder.

**Table 3.**

| **Results of Particle Size analysis.** | | | | | |
|---|---|---|---|---|---|
| | **Dried raw material** | **Dryer outlet material** | **Calciner / cooler outlet material** | **Pulverised material** | **Coated calcium carbonate** |
| **Size (µm)** | **Volume under, (%)** | | | | |
| 2.00 | 0.00 | 0.05 | 0.50 | 17.60 | 3.12 |
| 5.00 | 2.10 | 1.72 | 5.78 | 41.84 | 37.24 |
| 10.00 | 3.20 | 2.03 | 11.10 | 69.52 | 68.91 |
| 20.00 | 14.75 | 11.83 | 19.52 | 99.02 | 97.52 |
| 30.00 | 39.34 | 37.90 | 35.10 | 99.81 | 99.92 |
| 35.00 | 50.00 | 50.10 | 43.03 | 100.00 | 100.00 |
| 40.00 | 62.00 | 62.20 | 51.00 | 100.00 | 100.00 |
| 45.00 | 70.00 | 73.00 | 59.00 | 100.00 | 100.00 |
| 50.00 | 80.00 | 81.30 | 66.50 | 100.00 | 100.00 |
| 60.00 | 88.00 | 90.05 | 73.70 | 100.00 | 100.00 |
| 70.00 | 95.00 | 96.00 | 79.20 | 100.00 | 100.00 |
| 80.00 | 98.00 | 98.00 | 84.50 | 100.00 | 100.00 |
| 105.00 | 99.96 | 100.00 | 88.70 | 100.00 | 100.00 |
| 120.00 | 100.00 | 100.00 | 89.70 | 100.00 | 100.00 |

The process for the production of purified, finely divided and coated calcium carbonate according to the present invention uses a new kind of raw material which is a by-product generated in nitrophosphate fertiliser plant, hitherto not used for the purpose, having particle size in the range 20 to 150 microns and containing various types of impurities not usually found in the conventionally employed raw material, Limestone.

Moisture can be removed by drying the material at 105 to 110°C for a sufficient period. Generally, time required for drying decreases with increasing temperature up to a temperature where the material does not decompose.

Ammonium compounds such as (NH₄)₂CO₃ , NH₄HCO₃, NH₄Cl and NH₄F either sublimate or decompose at specific temperatures, e.g. ammonium carbonate decompose at 58°C, ammonium bicarbonate decompose between 36- 60°C and sublimate, ammonium nitrate decompose at 210°C. Ammonium chloride and fluoride sublimate at about 335°C. Calcium nitrate (anhydrous) melts at 561°C, Ca(NO₃)₂.3H₂O melt at 51.5°C, Ca(NO₃)₂. 4H₂O decomposes at 132°C. Calcium monophosphate decompose at 203°C, calcium diphosphate decompose at 25°C, and calcium triphosphate melt at 1670°C. Calcium pyrophosphate Ca₂P₂O₇ melt at 1230°C and calcium metaphosphate Ca(PO₃)₂ melt at 975°C, calcium hydroxide decomposes between 580-600°C to CaO and water.

Aragonite type calcium carbonate decomposes at 825°C, whereas calcite type decomposes at about 895°C into CaO and CO2. If calcium carbonate is heated to about 1000°C , it forms dead burnt/inactive CaO and liberate CO₂.

The inventive steps involved in the process include
- Using raw material without pre-drying or crushing.
- Keeping the material in free flowing conditions throughout the processing.
- Removal of the chemical impurities by thermal treatment.
- Improving brightness without using any special reagent.
- Calcination of very fine (20 to 150 micron) and highly dense (2.3 to 2.7 g/ml) with minimum dusting.
- Avoiding the requirement of special type of material of construction of rotary drum heater by limiting thermal treatment to lower temperature.
- Limiting the effect of thermal treatment to impurities without decomposing calcium carbonate.
- Arrangement for scrubbing the librated gases to avoid pollution surrounding environement.

The following examples are given by way of illustrations and therefore should not be construed to limit the scope of the present invention.

### EXAMPLE - 1

The by-product calcium carbonate having 11% moisture and 85% CaCO₃ on dry basis was fed at the rate of 10 kg / h. through a screw feeder having rotation speed of 20 revolution per minute (RPM) into the dryer preheated at 300°C with the angle of inclination 1.4 degrees and rotation speed of dryer shell 2 RPM. The hold up time was 30 minutes. The material coming out of the dryer was found to have moisture between 0.02% and 0.22% by weight. The outlet material was introduced into the second stage of heat treatment in rotary drum heater, preheated to 600° C by indirect heating with angle of inclination 1.08 degrees and shell rotation speed at 1.5 RPM. The hold up time was 30 minutes. The product was found to have 96% by weight. CaCO₃, 3.0% by weight. mixed oxides including P₂O₅ content of 1.5 % by weight.

### EXAMPLE - 2

The by-product calcium carbonate having 11% moisture and 85 % CaCO₃ on dry basis was fed at the rate of 10 kg / h. through a screw feeder having rotation speed of 20 revolution per minute (RPM) into the dryer preheated at 300°C with the angle of inclination 1.05 degrees and rotation speed of dryer shell 2 RPM. The hold up time was 30 minutes. The material coming out of the dryer was found to have moisture between 0.02% and 0.22% by weight. The outlet material was introduced into the second stage of heat treatment in rotary drum heater, preheated to 600°C by indirect heating with angle of inclination 1.08 degrees and shell rotation speed at 3 RPM. The hold up time was 30 minutes. The product was found to have 96% by weight CaCO₃, 3.0% by weight mixed oxides including P₂O₅ content of 1.5 % by weight

### EXAMPLE - 3

The by-product calcium carbonate having 2.26% moisture and 85% CaCO₃ on dry basis was fed at the rate of 10 kg / h. through a screw feeder having rotation speed of 20 revolution per minute (RPM) into the dryer preheated at 300°C with the angle of inclination 1.05 degrees and rotation speed of dryer shell 2 RPM. The hold up time was 30 minutes. The material coming out of the dryer was found to have moisture between 0.02% and 0.22% by weight. The outlet material was introduced into the second stage of heat treatment in rotary drum heater, preheated to 600°C by indirect heating with angle of inclination 1.08 degrees and shell rotation speed at 3 RPM. The hold up time was 30 minutes. The product was found to have 96% by weight. CaCO₃, 3.0% by weight. mixed oxides including P₂O₅ content of 1.5 % by weight.

### EXAMPLE-4

The by-product calcium carbonate having 12.6% moisture and 85 % CaCO₃ on dry basis was fed at the rate of 5kg / h. through a screw feeder having rotation speed of 6 revolution per minute (RPM) into the dryer preheated at 300°C with the angle of inclination 1.05 degrees and rotation speed of dryer shell 2 RPM. The hold up time was 30 minutes. The material coming out of the dryer was found to have moisture between 0.02% and 0.22% by weight. The outlet material was introduced into the second stage of heat treatment in rotary drum heater, preheated to 600°C by indirect heating with angle of inclination 1.08 degrees and shell rotation speed at 3 RPM. The hold up time was 30 minutes. The product was found to have 96% by weight. CaCO₃, 3.0% by weight. mixed oxides including P₂O ₅ content of 1.5 % by weight.

### EXAMPLE - 5

The by-product calcium carbonate having 18.5% moisture and 85 % CaCO₃ on dry basis was fed at the rate of 5kg / h. through a screw feeder having rotation speed of 6 revolution per minute (RPM) into the dryer preheated at 300°C with the angle of inclination 1.05 degrees and rotation speed of dryer shell 2 RPM. The hold up time was 30 minutes. The material coming out of the dryer was found to have moisture between 0.02% and 0.22% by weight. The outlet material was introduced into the second stage of heat treatment in rotary drum heater, preheated to 600°C by indirect heating with angle of inclination 1.08 degrees and shell rotation speed at 3 RPM. The hold up time was 30 minutes. The product was found to have 96% by weight. CaCO₃, 3.0% by weight. mixed oxides including P₂ O₅ content of 1.5 % by weight.

### EXAMPLE - 6

The by-product calcium carbonate having 12.6% moisture and 85 % CaCO₃ on dry basis was fed at the rate of 8kg / h. through a screw feeder having rotation speed of 6 revolution per minute (RPM) into the dryer preheated at 300°C with the angle of inclination 1.05 degrees and rotation speed of dryer shell 2 RPM. The hold up time was 30 minutes. The material coming out of the dryer was found to have moisture between 0.02% and 0.22% by weight. The outlet material was introduced into the second stage of heat treatment in rotary drum heater, preheated to 600°C by indirect heating with angle of inclination 1.08 degrees and shell rotation speed at 3 RPM. The hold up time was 30 minutes. The product was found to have 96% by weight. CaCO₃, 3.0% by weight. mixed oxides including P₂O₅ content of 1.5 % by weight. In this example cooler was also operated with screw rotation speed 7 RPM, cooling water flow rate 60 LPH, cooling water inlet temperature 24°C. The temperature of outlet material from rotary drum heater was greater then 30°C, and the temperature at cooler outlet was found to be 34°C.

### EXAMPLE-7

The heat treated material obtained in Example-1 was ground using ultra fine pulveriser keeping the temperature of the material below 60 ° C. The ground material was having particle size distribution as shown in Fig. 2 (d).

### EXAMPLE - 8

The ground calcium carbonate obtained in Example-7 was slurried to get about 50% weight/weight. Slurry which was heated to 85°C with continuous agitation. To this an emulsion prepared from stearic acid and sodium hydroxide in such a proportion so as to get 3.5 % by weight. coating on CaCO₃ was added. The slurry was allowed to cool to 45° C with continued agitation and thereafter product was isolated by filtration, washed with water, dried and pulverised. The coated sample was found to have properties as given in **Table 2.**

**The main advantages of the present invention are :**
1. Calcium carbonate rich by-product generated in industrial processes, specifically in nitrophosphate fertiliser plants could be purified by simple heat treatment using conventionally used machinery.
2. Calcium carbonate rich by-product is converted to value added material suitable for applications in rubber, paint, PVC and plastics.
3. An alternative source to limestone for producing finely divided calcium carbonate useful for commercial applications is explored.
4. Calcium carbonate rich by-product having fine particle size from 20 to 150 microns is successfully treated without contributing to pollution, commonly associated with such fine powders due to dusting.
5. A continuous process has been developed according to the present invention which can be linked with the plant generating calcium carbonate rich by-product. Thus, minimised the solid waste pollution caused by such by-products and improved the environmental quality.
6. As the temperature of heat treatment to purify the by-product calcium carbonate is around 600°C special type of steel is not required to be used in Rotary dryer and Drum heater.
7. Heat treatment provided special advantage of removing all the major impurities simultaneously. Therefore, not many unit operations are required in purification process.
8. A process developed with improved brightness of calcium carbonate without adding any extra reagent.

## Claims

1. A process for purification of calcium carbonate rich by-product generated in industrial processes, specifically in nitrophosphate fertiliser plant for producing high value finely divided calcium carbonate which comprises:
(a) feeding continuously wet calcium carbonate rich by-product containing maximum up to 25% moisture and having particle size in the range 20 to 150 microns, at a feed rate of 5 to 20 kg/h, with the help of screw feeder which is rotated at the speed of 10 to 40 RPM, into a Rotary Dryer, preheated and maintained at a desired temperature in the range of 260°C to 400°C to remove moisture up to 25%, volatile matter 7 to 8% and to decompose or sublime the ammonium compounds present as impurities in the range of 0.1 to 0.3% as ammonical nitrogen having the residence time of 20 - 30 minutes by changing the angle of inclination from 1.0 to 1.4 degree and varying rotation speed of dryer from 1 to 4 RPM, thereby varying material outlet rate from 2 to 20 kg/h, blowing away the liberated water vapours, volatile matters and ammonia gas from dryer and scrubbing the exhaust gases into a water tank so as to avoid dusting and liberation of ammonia in the surroundings of the plant,
(b) charging the outcoming material from dryer into Rotary Drum Heater, through connectors/breachers equipped with bellow and feed hopper, preheated to maintain desired temperature of 500°C to 600°C and to decompose or sublime the nitrate impurities 0.05 to 0.1% (as Nitrate Nitrogen), allowing the material to remain in rotary drum heater for a residence time from 30 to 90 minutes by changing angle of inclination from 1.0 to 1.4 degrees and varying rotation speed from 1 to 4 RPM,
(c) allowing the drum heater outlet material is cooled to get the purified material at an ambient temperature at an outlet rate synchronised with the outlet rate of rotary drum heater i.e. from 2 to 20 kg/h,
(d) subjecting to grinding in a pin/attrition mill to a microparticulate size in the range 1 to 20 microns,
(e) dispersing the finely divided calcium carbonate in a slurry tank so as to obtain 40 to 55% by weight. Solid slurry, heating the slurry to less than 95°C with agitation, followed by addition of hot (70 to 90°C) emulsion or solution of fatty acid derivatives or its salts, having carbon chain length of from 16 to 20 carbon atoms, in sufficient amount to get 3 to 4% total fatty matter in the final product, allowing the mixture to cool to less than 50°C whereafter water soluble components are removed from the mixture in known manner and the product is isolated,
(f) drying and pulverising to obtain finely divided coated calcium carbonate.

2. A process as claimed in claim 1 in step (a), wherein the feed material by-product calcium carbonate is fed into rotary dryer at feed rate of 5 to 20 kg/h, by setting the screw feeder rotation speed preferably at 5 to 20 RPM.

3. A process as claimed in claim 1 in step (a), wherein the said rotary dryer is preheated preferably in the range of 250°C to 350°C by indirect heating.

4. A process as claimed in claim 1 in step (a), wherein the said rotary dryer is set at an angle of inclination 1.08 to 1.4 degrees and rotation speed of shell preferably at 2 to 3 RPM.

5. A process as claimed in claim 1 in step (a), wherein the residence time for heat treatment is 20 to 30 minutes.

6. A process as claimed in claim 1 in step (b), wherein the outlet material from rotary dryer is charged into a rotary drum heater, which is preheated to 550°C to 600°C by indirect heating through a connection equipped with feed hopper and bellow.

7. A process as claimed in claim 1 in step (b), wherein the residence time to heat treatment is preferably 30 to 45 minutes in rotary drum heater.

8. A process as claimed in claim 1 in step (c), wherein the hot material coming out of rotary heater is allowed to pass through a water jacketed material cooler having screw conveyer rotating at 5 to 15 RPM to get an outlet temperature of material less than 35°C.

9. A process as claimed in claim 1 in step (c), wherein the material outlet rate is preferably 5 to 15 kg/h.

10. A process as claimed in claim 1, in step (d), wherein the outlet material from cooler is ground to reduce the particle size in the range of 10 to 20 microns

11. A process as claimed in claim 1 in step (e), wherein the said finely divided calcium carbonate is dispersed in water to obtain a 45 to 55% (weight./vol.) slurry, heated to 85 to 95°C with continuous agitation and mixed with hot (85 to 95°C) emulsion of stearic acid derivative prepared separately, allowed to cool to 20 to 45°C with continuous agitation, so as to obtain 2 to 3.5 weight % coating with fatty material.

12. A process as claimed in claim 1 in step (f), wherein the said finely divided calcium carbonate possesses the properties as given in Table 2 which is suitable as filler in rubber, paint, PVC, plastics, etc.

13. A process as claimed in claims 1 to 11, wherein the brightness or whiteness of product is improved without adding any additional reagent

14. A process as claimed in claims 1 to 11, wherein an alternative source to limestone for producing calcium carbonate for commercial application is developed.

15. A process as claimed in claims 1 to 11, wherein the process is environmental friendly in nitrophosphate fertiliser plant.

## Patentansprüche

1. Verfahren zur Reinigung eines in industriellen Prozessen, insbesondere in einer Nitrophosphat Dünger Fabrik, anfallenden Nebenprodukts reich an Kalziumkarbonat, zur Herstellung von hochwertigem, fein verteiltem Kalziumkarbonat, mit folgenden Schritten:
(a) kontinuierliches Einbringen von nassem Nebenprodukt reich an Kalziumkarbonat, mit bis zu maximal 25% Feuchtigkeit und mit einer Korngrösse im Bereich von 20 - 150 Mikrometern, unter einer Einbringrate von 5-20 kg/h und mit Hilfe eines, mit einer Umdrehungszahl von 10 - 40 Drehungen par Minute rotierenden Schneckenförderers, in einen Drehtrockner, der auf eine(r) Temperatur im Bereich zwischen 260°C und 400°C vorerwärmt bzw. gehalten wird, um bis zu 25% Feuchtigkeit und 7 - 8% verflüchtigendes Material zu entfernen, und Ammoniakverbindungen zu zertrennen oder zu verflüchtigen, welche als Verunreinigungen zu 0, 1 - 0.3% in Form von ammonisierten Stickstoff vorhanden sind, mit einer Verweilzeit von 20 - 30 Minuten, durch Ändern des Neigungswinkels von 1,0 auf 1,4 Grad, und Verändern der Rotationsgeschwindigkeit des Trockners von 1 - 4 Drehungen pro Minute, wodurch die Materialabgaberate von 2 - 20 kg/h variiert wird, Wegblasen des freigewordenen Wasserdampfes, von flüchtigem Material und von Ammoniakgas vom Trockner und Auswaschen der Abgase in einem Wassertank um Staubentwicklung und Ammoniakfreigabe in die Fabrikumgebung zu vermeiden,
(b) Einführen des abgegebenen Materials über, mit Balg und Einfuhrtrichter ausgestatteten, Verbindungselemente/Trenner vom Trockner in einen Drehtrommel-Erwärmer um eine gewünschte Temperatur von 500°C - 600°C beizubehalten, und um die in Form von 0,05 - 0,1% (Nitrat Stickstoff) vorliegenden Nitratverunreinigungen zerfallen oder verflüchtigen zu lassen, Verweilen des Materials im Drehtrommel-Erwärmer während 30 - 90 Minuten unter Änderung des Neigungswinkels von 1,0 - 1,4 Grad und Verändern der Rotationsgeschwindigkeit von 1 - 4 Drehungen pro Minute,
(c) Abkühlen des Abgabematerials vom Trommel-Erwärmer um das gereinigte Material auf Umgebungstemperatur zu bringen unter einer Abgaberate die mit der Abgaberate der Drehtrommel-Erwärmer, das heisst von 2 - 20 kg/h übereinstimmt
(d) Zerreiben in eine Stift-Reibungsmühle auf ein Mikroteilchen Grösse im Bereich von 1 - 20 Mikrometern,
(e) Dispergieren des feinverteilten Kalziumkarbonats in einem Schlemmbehälter um eine Aufschlemmung mit 40 - 55% Festanteil zu erhalten, Erwärmen der Aufschlemmung unter Rühren auf weniger als 95°C, gefolgt von Zugabe von heissem (70 - 90°C) einer Lösung oder Emulsion von Fettsäurederivaten oder -salzen, mit einer Länge der Kohlenstoffketten von 16 bis 20 Kohlenstoffatomen, in einer Menge die ausreicht um 3 - 4% gesamten Fettgehalt im Endprodukt zu erhalten, Abkühlen der Mischung auf weniger als 50°C, wonach wasserlösliche Anteile in bekannter Weise aus der Mischung entfernt werden, und Isolieren des Produkts,
(f) Trocknen und Pulverisieren um feinverteiltes ummanteltes Kalziumkarbonat zu erhalten.

2. Verfahren nach Anspruch 1, worin, im Verfahrensschritt (a) das Kalziumkarbonat enthaltende Nebenprodukt-eingangsmaterial durch Einstellen der Rotationsgeschwindigkeit des Schneckenförderers auf 5 - 20 Drehungen pro Minute, unter einer Zufuhrrate von 5 - 20 kg/h in den Drehtrockner eingebracht wird.

3. Verfahren nach Anspruch 1, worin, im Verfahrenschritt (a) die Vorwärmung des Drehtrockners durch indirekte Heizung vorzugsweise auf eine Temperatur im Bereich von 250°C bis 350°C erfolgt.

4. Verfahren nach Anspruch 1, worin, im Verfahrensschritt (a) der Drehtrockner auf einen Neigungswinkel von 1.08 bis 1.4 Grad und die Drehgeschwindigkeit der Schale auf 2 - 3 Umdrehungen pro Minute eingestellt wird.

5. Verfahren nach Anspruch 1, worin, im Verfahrensschritt (a) die Verweilzeit für die Wärmebehandlung 20 - 30 Minuten ist.

6. Verfahren nach Anspruch 1, worin, im Verfahrensschritt (b) das Abgabematerial des durch indirekte Heizung auf 500 - 600°C vorerwärmten Drehtrockners über eine, einen Einfuhrtrichter und einen Balg aufweisende Verbindung dem Drehtrommel-Erwärmer zugeführt wird.

7. Verfahren nach Anspruch 1, worin, im Verfahrensschritt (b) die Verweilzeit für die Wärmebehandlung im Drehtrommel-Erwärmer vorzugsweise 30 bis 45 Minuten ausmacht.

8. Verfahren nach Anspruch 1, worin, im Verfahrensschritt (c) das vom Dreh-Erwärmer abgegebene Material durch einen Materialkühler mit Wassermantel geführt wird, der eine Förderschnecke aufweist die mit einer 5 - 15 Drehungen pro Minute rotiert, um eine Abgabetemperatur von weniger als 35°C zu erhalten.

9. Verfahren nach Anspruch 1, worin, im Verfahrensschritt (c) die Materialabgaberate vorzugsweise 5 - 15 kg/h ist.

10. Verfahren nach Anspruch 1, worin, im Verfahrensschritt (d) das Abgabematerial vom Kühler zur Verkleinerung der Teilchengrösse auf 10 - 20 Mikrometer gemahlen wird.

11. Verfahren nach Anspruch 1, worin, im Verfahrensschritt (e) das genannte feinverteilte Kalziumkarbonat in Wasser, um eine 45 - 55% (Gewicht/Volumen) Aufschlemmung zu erreichen, dispergiert, unter fortlaufendem Rühren auf 85 - 95°C erwärmt und mit separat erhaltener Lösung oder Emulsion von Stearinsäurederivat vermischt, und unter fortlaufendem Rühren auf 20 - 45°C abgekühlt wird, um eine Ummantelung aus fetthaltigem Material von 2 - 3.5% zu erhalten.

12. Verfahren nach Anspruch 1, worin, im Verfahrensschritt (f) das genannte feinverteilte Kalziumkarbonat die in Tabelle 2 aufgeführten Eigenschaften aufweist, und welches als Füller in Gummi, Farbe, PVC, Plastik und dgl. geeignet ist.

13. Verfahren nach Ansprüchen 1 - 11, worin die Helligkeit bzw. der Weissgrad des Produkts ohne Zugabe weiterer Reaktoren erhöht wird.

14. Verfahren nach Ansprüchen 1 - 11, worin eine alternative Quelle zu Kalkstein zur Erzeugung von Kalziumkarbonat, für kommerzielle Zwecke, entwickelt wird.

15. Verfahren nach Ansprüchen 1 - 11, worin der Prozess im Umfeld einer Nitrophosphatdüngerfabrik umweltfreundlich ist.

## Revendications

1. Procédé de purification de sous-produit riche en carbonate de calcium généré dans des processus industriels, de manière plus spécifique dans une usine d'engrais phospho-azotés pour produire du carbonate de calcium finement divisé à haute valeur ajoutée qui comprend :
(a) l'alimentation en continu d'un sous-produit riche en carbonate de calcium humide contenant une humidité maximale pouvant atteindre 25 % et ayant une taille des particules située dans la plage de 20 à 150 microns, à une vitesse d'alimentation de 5 à 20 kg/h, à l'aide d'un alimentateur à vis qui tourne à la vitesse de 10 à 40 t/min, dans un sécheur rotatif, préchauffé et maintenu à une température souhaitée comprise dans la plage de 260 °C à 400 °C pour éliminer l'humidité jusqu'à 25 %, les matières volatiles de 7 à 8 %, et pour décomposer ou sublimer les composés ammonium présents comme impuretés dans la plage de 0,1 à 0,3 % comme azote ammoniacal ayant le temps de séjour de 20 à 30 minutes en changeant l'angle d'inclinaison de 1,0 à 1,4 degré et en faisant varier la vitesse de rotation du sécheur de 1 à 4 t/min, faisant varier de ce fait la vitesse de sortie de la matière de 2 à 20 kg/h, en évacuant par soufflage les vapeurs d'eau libérées, les matières volatiles et le gaz ammoniac du sécheur et en lavant les gaz d'échappement dans un réservoir d'eau de manière à éviter la production de poussières et la libération d'ammoniac aux environs de l'usine,
(b) le chargement de la matière à la sortie du sécheur dans un réchauffeur à tambour rotatif, par des raccords/ouvertures équipé(e)s d'un soufflet et d'une trémie d'alimentation, préchauffée pour maintenir la température souhaitée entre 500 °C et 600 °C et pour décomposer ou sublimer les impuretés de nitrate de 0,05 à 0,1 % (comme azote de nitrate), permettant à la matière de rester dans le réchauffeur à tambour rotatif pendant un temps de séjour de 30 à 90 minutes en changeant l'angle d'inclinaison de 1,0 à 1,4 degré et en faisant varier la vitesse de rotation du sécheur de 1 à 4 t/min,
(c) laissant refroidir la matière à la sortie du réchauffeur à tambour pour amener la matière purifiée à une température ambiante à une vitesse de sortie synchronisée à la vitesse de sortie du réchauffeur à tambour rotatif, c'est-à-dire, de 2 à 20 kg/h,
(d) l'exposition au broyage dans un broyeur à pointes/par frottement à une taille microparticulaire dans la plage de 1 à 20 microns,
(e) la dispersion du carbonate de calcium finement divisé dans un réservoir de matière en suspension de manière à obtenir de 40 à 55 % en poids de suspension solide, le chauffage de la suspension à une température inférieure à 95 °C avec agitation, suivi de l'addition d'une émulsion chaude (70 à 90 °C) ou d'une solution de dérivés d'acides gras ou de leurs sels, ayant une longueur de chaîne carbonée comprise entre 16 et 20 atomes de carbone, en quantité suffisante pour obtenir de 3 à 4 % de matière grasse totale dans le produit final, permettant au mélange de refroidir à une température inférieure à 50 °C, après quoi les composants solubles dans l'eau sont éliminés du mélange d'une manière connue et le produit est isolé,
(f) le séchage et la pulvérisation pour obtenir du carbonate de calcium revêtu finement divisé.

2. Procédé selon la revendication 1 dans l'étape (a), dans lequel le carbonate de calcium de sous-produit de matière d'alimentation est introduit dans un sécheur rotatif à une vitesse d'alimentation de 5 à 20 kg/h, en réglant la vitesse de rotation de l'alimentateur à vis, de préférence, entre 5 et 20 t/min.

3. Procédé selon la revendication 1 dans l'étape (a), dans lequel ledit sécheur rotatif est préchauffé, de préférence, dans la plage de 250 °C à 350 °C par chauffage indirect.

4. Procédé selon la revendication 1 dans l'étape (a), dans lequel ledit sécheur rotatif est réglé à un angle d'inclinaison de 1,08 à 1,4 degré et à une vitesse de rotation de corps, de préférence, comprise entre 2 et 3 t/min.

5. Procédé selon la revendication 1 dans l'étape (a), dans lequel le temps de séjour pour le traitement thermique est compris entre 20 et 30 minutes.

6. Procédé selon la revendication 1 dans l'étape (b), dans lequel la matière à la sortie du sécheur rotatif est chargée dans un réchauffeur à tambour rotatif, qui est préchauffé entre 550 °C et 600 °C par chauffage indirect par un raccord équipé d'une trémie d'alimentation et d'un soufflet.

7. Procédé selon la revendication 1 dans l'étape (b), dans lequel le temps de séjour pour le traitement thermique est compris, de préférence, entre 30 et 45 minutes dans le réchauffeur à tambour rotatif.

8. Procédé selon la revendication 1 dans l'étape (c), dans lequel la matière chaude sortant du réchauffeur rotatif peut passer à travers un refroidisseur de matière à chemise d'eau ayant un transporteur à vis tournant entre 5 et 15 t/min pour obtenir une température de sortie de la matière inférieure à 35 °C.

9. Procédé selon la revendication 1 dans l'étape (c), dans lequel la vitesse de sortie de la matière est comprise, de préférence, entre 5 et 15 kg/h.

10. Procédé selon la revendication 1, dans l'étape (d), dans lequel la matière à la sortie du refroidisseur est broyée pour réduire la taille des particules dans la plage de 10 à 20 microns.

11. Procédé selon la revendication 1 dans l'étape (e), dans lequel le carbonate de calcium finement divisé est dispersé dans l'eau pour obtenir une suspension de 45 à 55 % (poids/vol.), chauffée à une température comprise entre 85 et 95 °C avec une agitation continue et mélangée à une émulsion chaude (85 à 95 °C) de dérivé d'acide stéarique préparée séparément, laissée à refroidir entre 20 et 45 °C avec une agitation continue, de manière à obtenir un revêtement de 2 à 3,5 % en poids avec de la matière grasse.

12. Procédé selon la revendication 1 dans l'étape (f), dans lequel ledit carbonate de calcium finement divisé possède les propriétés telles qu'indiquées dans le Tableau 2 qui est approprié comme charge dans le caoutchouc, la peinture, le PVC, les matières plastiques, etc.

13. Procédé selon les revendications 1 à 11, dans lequel l'éclat ou la blancheur du produit est amélioré(e) sans ajouter de réactif additionnel.

14. Procédé selon les revendications 1 à 11, dans lequel une autre source que le calcaire pour produire du carbonate de calcium pour une application commerciale est mise au point.

15. Procédé selon les revendications 1 à 11, dans lequel le procédé est respectueux de l'environnement dans une usine d'engrais phospho-azotés.
